Europäisches Patentamt

European Patent Office

Office européen des brevets

(19)

(11) **EP 1 338 098 B1**

(12) **EUROPEAN PATENT SPECIFICATION**

(45) Date of publication and mention
of the grant of the patent:
**14.12.2005 Bulletin 2005/50**

(21) Application number: **01980459.0**

(22) Date of filing: **01.10.2001**

(51) Int Cl.⁷: **H04B 7/005**, H04L 1/00

(86) International application number:
**PCT/EP2001/011329**

(87) International publication number:
**WO 2002/045291 (06.06.2002 Gazette 2002/23)**

(54) **ALLOCATION OF SHARED CHANNEL DATA RATES IN A COMMUNICATION SYSTEM**

ZUORDNUNG VON DATENRATEN IN EINEM GEMEINSAM GENUTZTEN KANAL IN EINEM
KOMMUNIKATIONSSYSTEM

ATTRIBUTION DE DEBITS BINAIRES DANS DES CANAUX PARTAGEES D'UN SYSTEME DE
COMMUNICATION

(84) Designated Contracting States:
**AT BE CH CY DE DK ES FI FR GB GR IE IT LI LU
MC NL PT SE TR**

(30) Priority: **28.11.2000 GB 0029002**

(43) Date of publication of application:
**27.08.2003 Bulletin 2003/35**

(60) Divisional application:
**05075699.8 / 1 578 027**

(73) Proprietor: **Nokia Corporation
02150 Espoo (FI)**

(72) Inventor: **RAITOLA, Mika
FIN-02430 Masala (FI)**

(74) Representative: **Ruuskanen, Juha-Pekka et al
Page White & Farrer,
54 Doughty Street
London WC1N 2LS (GB)**

(56) References cited:
**WO-A-00/38351           WO-A-00/44110
WO-A-01/11815           WO-A-99/40743
US-A- 5 734 967**

## Description

Field of the Invention

The present invention relates to channels in a communication system, and in particular, but not exclusively, to adaptation of radio channels.

Background of the Invention

A communication system typically operates in accordance with a given standard or specification which sets out what the various elements of the system are permitted to do and how that should be achieved, i.e. the technology on which the communication is based on. A communication system may comprise one or more communication networks. A communication network is a cellular network. A cellular system consists of access entities typically referred to as cells, hence the name cellular system.

A feature of the cellular system is that it provides mobility for the mobile stations subscribing thereto. That is, the mobile stations are enabled to move within the cell and from a cell to another cell and even from a cellular network to another cellular network if both of the networks are compatible with the standard the mobile station is adapted to.

Examples of the different cellular standards and/or specifications include, without limiting to these, standards such as GSM (Global System for Mobile communications) or various GSM based systems (such as GPRS: General Packet Radio Service), EDGE (Enhanced Data rate for GSM Evolution or CDMA or WCDMA (Code Division Multiple Access or Wideband CDMA) based 3rd generation telecommunication systems such as the Universal Mobile Telecommunication System (UMTS), i-Phone, IS-95 and IMT 2000 (International Mobile Telecommunication System 2000) and so on. It should be appreciated that the terminology used in the different standards may vary from each other.

As mentioned above, an access entity may be formed by a cell. The cell can be defined as a certain area covered by a base transceiver station (BTS) serving user equipment (UE) in the cell coverage area via a wireless interface. The base station forms a part of an radio access network (RAN). It should be appreciated that the size of the cell depends on the system and circumstances. However, each cell is typically provided with at least one base station. The communication between a user equipment (UE) within one of the access entities (such as the cells or other service areas) of the communication system and a base station is typically be controlled by one or several controllers. Examples of the controller nodes include access network controller such as a radio network controller (RNC) and core network controllers such as a serving GPRS support node (SGSN), but other control nodes may also be implemented in the network.

The communication between the base station and the mobile user equipment i.e. mobile station may occur in both uplink direction and downlink direction. The term 'downlink' refers to the direction from the access network base station to the mobile user equipment. The term 'uplink' refers to the direction from the mobile user equipment to the base station. In communication systems, such as the UMTS, data streams may be transported in the uplink and/or downlink via various radio or wireless communication channels. These channels may be referred to as transport channels. Examples of the transport channels, without limiting to these, include dedicated channels (DHC), downlink shared channels (DSCH), uplink shared channels (USCH) and common packet channels (CPCH).

To give an example of the shared transport channels, release 99 of the WCDMA standard by the third generation partnership project (3GPP) defines shared channels such as a downlink shared channel (DSCH) and a physical downlink shared channel (PDSCH). From these the DSCH is a logical channel. The PDSCH is a physical relation of the DSCH over an air interface. Parameters such as a data transmission rate, referred to in the following as bitrate, and transmission power can be defined for the channels. The user bitrate may be defined by a network controller or alternatively by the base station. Exemplifying bitrate values are such as 1024, 512, 256, 128, 64, 32 and 16 kbps (kilobits per second). The transmission power levels may be set by a base station and/or a network controller or even by a mobile station, depending on the application. In addition to controlling the power levels, the control functions may comprise, among other things, control of the allocated bitrates for data transmissions on the transport channels of the communication system and so on.

Document US-A-5734967 discloses a system in which the encoding rate of a mobile is determined based on e.g. distance measurements, physical resource power and mobile determined noise.

The selection of the bitrate and power of the physical downlink shared channel (PDSCH) can be made rather freely. One reason for this is that in the downlink the user equipment does not have to participate in procedure of bitrate or power selection. This is done in the network side, e.g. by the base station or the radio network controller. However, the selected transport format needs to be signalled to the mobile station and thus the appropriate network element informs the user equipment what bitrate it is using for the downlink. Otherwise the user equipment would not know how to decode the received signal. The information can be transmitted by using so called downlink transport format indication bits.

In applications that are capable of transmitting multimedia over wireless interfaces, such as the third generation communication systems, the downlink is considered at present to be the most restrictive transmission direction. This is believed to be so mainly because the traffic is typically asymmetric in the present multimedia applications. That is, in most, but not all, applications the downlink can be substantially more heavily loaded than the uplink.

A possibility to improve the downlink capacity is to use a suitable link adaptation mechanism. The link adaptation mechanism refers in general to a mechanism that allows provision of different data transmission capacity for different users. For example, data may be transmitted with higher bitrates towards those mobile users who are close to the base station and with lower bitrates towards those mobile users who are more remote. Link adaptation is typically used to enhance radio resource management (RRM) functions. The radio resource management may be based on various parameters, such as the measured power levels in the cell and/or interference in the cell. However, the inventor has found that with a shared channel and bursty data these parameters used for the radio resource management may fluctuate substantially lot. This means that the loading of the system can be very unstable. For this reason lower maximum loading limit may have to be used, which leads to decrease in the system capacity.

Summary of the Invention

Embodiments of the present invention aim to address one or several of the problems of the prior art link adaptation techniques.

According to one aspect of the present invention, there is provided a method in a communication system, comprising: defining a common data rate target for user equipment sharing communication channels when communicating with a station of the communication system; determining average transmission power used for communication between a user equipment and said station; and setting a data rate allocated for said user equipment based on information of the determined average transmission power and the common data rate target.

According to another aspect of the present invention there is provided a communication system, comprising: a station; a user equipment capable of communicating with the station over at least one communication channel shared with other user equipment; control means for defining a common data rate target for all those user equipment that use the at least one shared communication channel; means for determining an average power that is used for communication between said user equipment and said station; and control means for allocating a data rate to be provided for said user equipment based on information of the determined average power and the common data rate target.

According to another aspect of the present invention there is provided a base station for a communication system, comprising: transmitter means for transmitting towards a user equipment over at least one communication channel shared with at least two user equipment; control means for defining a common data rate target for all those user equipment that use the at least one shared communication channel; means for determining an average power that is used for communication towards said user equipment; and control means for allocating a data rate to be provided for said user equipment based on information of the determined average power and the common data rate target.

In a more specific embodiments of the invention, the allocated data rate depends on the distance between the user equipment and the station, the distance being determined based on the determined average power. The dependency may be such that if the user equipment is located closer to the station than another, more remote user equipment, said one user equipment is provided with a higher data rate that said more remote user equipment. A user equipment determined to be substantially close to the base station may be provided with a data rate that is the common data rate target or substantially close to the common data rate target.

The average power may be determined based on information associated with a dedicated channel that associates with the communication channel used by the user equipment. The average power may alternatively or in addition be determined based on information associated with a Perch channel. The information may comprise the power of said channel.

The data rate target may be defined when the network is planned or upgraded. The data rate target may be adaptive.

The data rate may be adjusted by a controller of the station and/or by a controller of the user equipment. The average transmission power may be the average transmission power by which the station transmits towards the user equipment. The average power may alternatively be the average power in which the station or the user equipment receives.

The embodiments of the invention provide a solution for link adaptation. The solution may be especially advantageous for adaptation of shared channels. The embodiments may reduce interference fluctuations and may thus improve the overall system performance. The embodiments may improve user throughput and overall data transmission capacity. It is, for example, possible to provide those mobile users who are close to a base station with higher data transmission rates than those mobile users who are more remote, whereby a higher cell throughput is provided. The average transmission power i.e. interference which a base station is causing may be kept more stable than in the prior art solutions. This may improve the network operation and may allow higher load targets for the network. This in turn may increase the capacity of the system.

Brief Description of Drawings

For better understanding of the present invention, reference will now be made by way of example to the accompanying drawings in which:

Figure 1 shows a base station and four differently located mobile stations;
Figure 2 is a diagram illustrating the bitrates allocated for the mobile stations of Figure 1;
Figure 3 is a diagram illustrating the power levels associated with the mobile stations of Figure 1; and
Figure 4 is a flowchart illustrating the operation of one embodiment of the present invention.

Description of Preferred Embodiments of the Invention

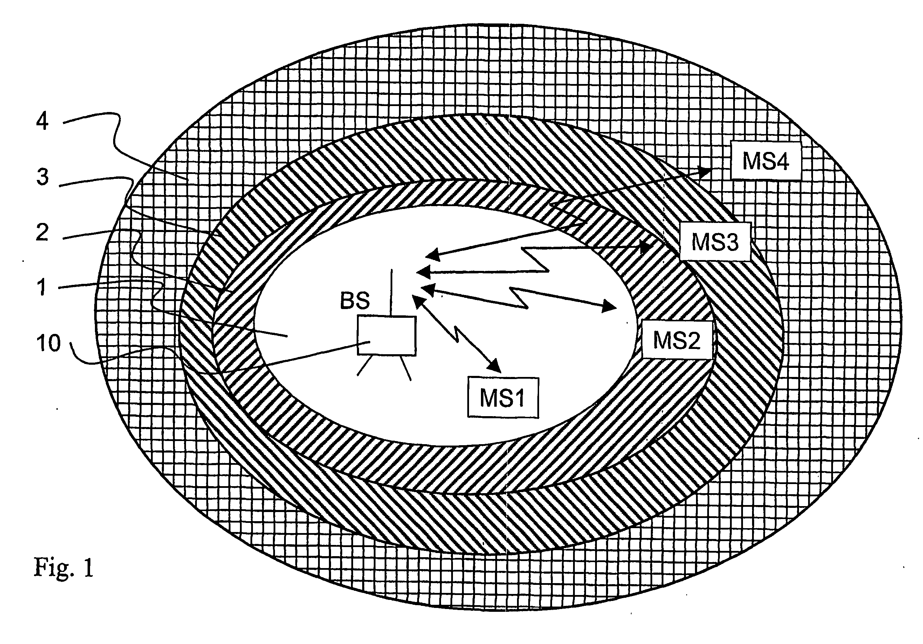

Reference is made to Figure 1 which shows schematically a cell of a cellular communication network. The network may be, for example, but without limiting to this, a third generation Universal Mobile Telecommunication Service (UMTS) network that is based on Wideband Code Division Multiple access (WCDMA) technique. The cell comprises a base station BS. The base station BS is preferably provided with controller means 10 for controlling he operation thereof. The base station BS is shown to be in wireless communication with four mobile stations MS1 to MS4. The mobile stations are shown to be located with different distances from the base stations so that the mobile station MS1 is the closest mobile station to the base station BS and the mobile station MS4 is the most remote mobile station to the base station BS.

The cell of Figure 1 can be seen as to be divided to different bitrate zones based on the distance from the base station BS. Adjustment of data transmission rates between the base station BS and the mobile stations MS1 to MS4 may be based on the required transmission power between the respective mobile station and the base station. The adjustment may be accomplished under the control of the controller 10 of the base station BS. If same bitrate is used for the data transmission, the more far away a mobile station is the more power is needed. On the other hand, if a higher bitrate is to be used more power is needed than with a lower bitrate.

When the system tries to keep the power at the same level for all mobile stations, the far away mobile stations will get lower bitrates than the mobile stations that are closer to the base station. Thus, virtually the cell can be seen as divided into several zones 1 to 4 such that different bitrates are used in each of the virtual zones.

Instead of adjusting the data rates directly based on the location of the mobile stations MS1 to MS4, a dependency between the data rate and the distance from the base station BS can be based on an appropriate parameter indicative of the distance. The parameter may be linear or logarithmic, depending on the application.

In a preferred embodiment of the present invention an average base station transmission power is measured. The average transmission power used for each mobile station is preferably measured by the base station BS. The measurement may be handled under the control of the controller entity 10. Based on the average transmission power, it is possible to determine how close (or far) a mobile station is located relative to the base station. The data transmission rates over the wireless interfaces are then adjusted based on the distance that was determined based on the measured average transmission power. The transmission data rate may be based on the measured average transmission power of a certain link to a certain mobile station.

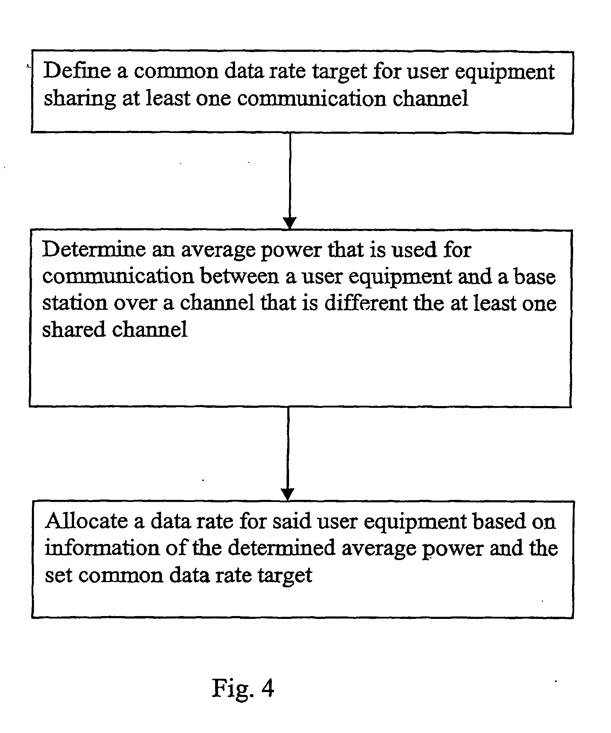

The following will describe, with reference also to Figure 4, an embodiment that relates to shared channels of a third generation WCDMA system. At present a WCDMA based system enables data rate i.e. bitrate values up to about 2 Mbit/s. In the WCDMA based systems a number of downlink shared channel users can be multiplexed into a single shared channel in time domain. Dedicated Shared Channel (DSCH) allows each user to have different transport format set to it. The transport format is used to define the bitrate that is to be used for data transmission over the wireless interface between the base station and the mobile station. The DSCH power and bitrate control may be implemented such that the control is handled by the controller of the base station. The DSCH power and bitrate can be changed substantially rapidly. Therefore the proposed link adaptation is considered to suit especially well for the Dedicated Shared Channel (DSCH).

In the preferred embodiment the user average base station transmission power is measured and the bitrate which the mobile subscriber (i.e. the mobile station) has is set based on information regarding the measurement results. The bitrate target may be set to be a common value for all those mobile stations to whom transmission occurs through a particular shared channel. The target may sometimes be referred to as a setpoint. In general terms, the target refers to a value that is desired for the connection and is a value that one or more of the elements involved in the connection between the base station and the mobile station try to reach.

The target may be set e.g. during network planning or any time thereafter, e.g. during network upgrade.

The target may also be arranged to be slowly adaptive according the load situation i.e. the available or used capacity of the cell. The adaptive target may be controlled by means of the access network controller. The access network controller may be provided by the base station controller 10 or another controller controlling the access network, such as a radio network controller (RNC). The adaptive control is preferably discontinuous such that over predefined and preferably short time periods (say few data frames) the target is kept constant.

For those users who are relatively close to the base station BS the bitrate may be set to be substantially close to a set bitrate target value, such as PtxTargetDSCH. Those mobile stations which are substantially far away, such as the mobile station MS4, the bitrate may be set to be in a substantially lower level than what is provided for the mobile stations closer to the base station.

The data transmission rate i.e. the bitrate is defined based on information of the average transmission power in at least one other channel. The average transmission power can be measured e.g. from the associated dedicated channel (DCH). The DCH can be kept running for a much longer time than the DSCH since the DCH bitrate will in most instances be lower than what the DSCH bitrate is. The transmission power could also be measured from a so called Perch channel before DSCH access. The Perch channel refers to a common pilot channel, in which the power is constant. The Perch channel can also be measured by all mobile stations in a cell. It is used for various measurements, for example measurement associated with handovers, signal reception and so on.

In general, the bitrate of a user in a dedicated shared channel (DSCH) may be set, for example, according the following equation:

$$bitrate_{DSCH} = \frac{Ptx_{DSCH} \times EbN0_{DCH}}{Ptx_{DCH} \times EbN0_{DSCH}} \times bitrate_{DCH}$$

In the above equation the Ptx values are the transmission powers of the dedicated channel (DCH) and dedicated shared channel (DSCH) and the EbN0 values correspond the EbN0 values of the respective channels. The term 'EbNo' refers to a connection quality parameter value that is used for defining a signal energy / noise ratio for a connection. The EbNo value may be measured for the connection or the EbNo value may be obtained otherwise from the system, such as based on parameterisation in accordance with a cell average (so called 'EbN0_planned'). The distance is relative to the transmission power needed to reach a certain mobile. Thus the term Ptx_DCH depends on the distance.

It shall be appreciated that the above equation may not necessarily result to a 'good' i.e, exact bitrate value that is used by the system, like 32, 64, 128 kbit/s and so on. Thus, rounding of the calculation result to some discrete bitrate may be needed.

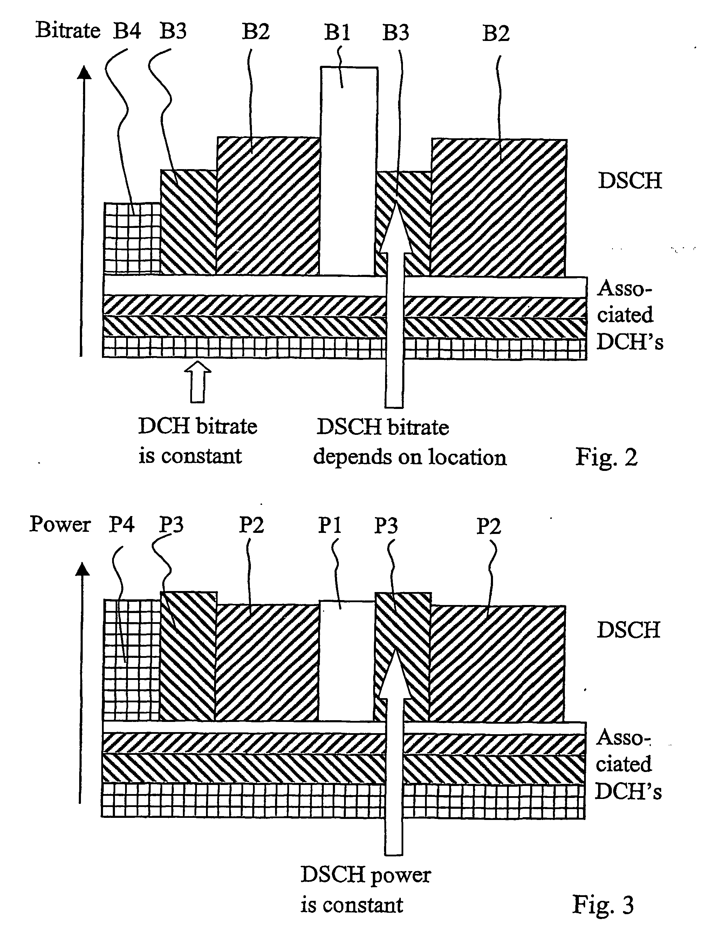

Figures 2 and 3 illustrate the link adaptation result obtained for an embodiment. The patterns used in the diagrams correspond the patterns used for the zones 1 to 4 of Figure 1. In Figure 2, Bitrate B1 is the bitrate provided for mobile station MS1, Bitrate B2 is the bitrate provided for mobile station MS2 and so on. Correspondingly, in Figure 3 power P1 is the average power provided for mobile station MS1, power P2 is the average power provided for mobile station MS2 and so on.

As shown by Figure 2, the a mobile user MS1 within zone 1 and thus substantially close to the base station BS of the cell is provided with a higher bitrate B1 than what is provided for the more remote mobile users MS 2 to MS 4 within zones 2 to 4, respectively. The relative bitrates B2 to B4 provided for these three mobile stations MS2 to MS4 in zones 2 to 4 depend correspondingly from the distance between the base station BS and the respective mobile station.

As shown by Figure 3, the average transmission powers P1 to P4 and thus the interference caused by the base station BS can be kept more stable. This may enhance the operation of the network and may also allow higher load target to be used in network, thus increasing the capacity.

In some embodiments the hardware resources and the radio interface capacity may need to be allocated according the maximum bitrate in the DSCH.

This above embodiment are described with reference to dedicated shared channels (DSCH) for the downlink. However, it shall be appreciated that the invention is also applicable with a uplink shared channel (USCH). The invention may also be applied for any duplex transmission methods in systems employing shared channels. These methods include the TDD (time division duplex) transmission mode, the FDD (frequency division duplex) transmission mode and the SDD (space division duplex) transmission mode. Each of these method may be used for the communication in the 3rd generation communication systems, such as the UMTS.

The average power is typically determined for the transmission power of the base station, for example by means of the controller 10. However, since a mobile station may also transmit in different power levels, it is also possible to base the data rate adjustment on the average transmission power of the mobile station. These operations may be controlled by means of a controller provided in association with the mobile station, such as by means of a controller 11 of the mobile station MS4 of Figure 1. These two alternatives are available for both the uplink and downlink adjustment. In addition, the average power may be based on determination of both the uplink and downlink power between a base station and a mobile station.

It should be appreciated that whilst the exemplifying embodiments of the present invention have been described in relation to mobile stations, embodiments of the present invention are applicable to any other suitable type of user equipment. It shall be appreciated that the radio interface may be referred to as lub interface. It shall also be appreciated that in some standards the base station may be referred to differently, such as by term 'Node B'.

Furthermore, the embodiments of the present invention have been described in the context of a WCDMA system. This invention is also applicable to any access techniques including code division multiple access, frequency division multiple access, time division multiple access and space division multiple access as well as any hybrids thereof.

It is also noted herein that while the above describes exemplifying embodiments of the invention, there are several variations and modifications which may be made to the disclosed solution without departing from the scope of the present invention as defined in the appended claims.

**Claims**

1. A method for a communication system, comprising:

    defining a common data rate target for user equipment (MS1 - MS4) sharing communication channels when communicating with a station (10) of the communication system; determining average transmission power used for communication between a user equipment and said station; and setting a data rate allocated for said user equipment based on information of the determined average transmission power and the common data rate target.

2. A method as claimed in claim 1, wherein the allocated data rate depends on the distance between the user equipment (MS1 - MS4) and the station (10), the distance being determined based on the determined average power.

3. A method as claimed in claim 2, wherein the dependency is such that if the user equipment (MS1 - MS4) is located closer to the station (10) than another user equipment, said one user equipment is provided with a higher data rate that said more remote user equipment.

4. A method as claimed in claim 2 or 3, wherein a user equipment (MS1) determined to be substantially close to the base station (10) is provided with a data rate that is the common data rate target or substantially close to the common data rate target.

5. A method as claimed in any preceding claim, wherein the average power is determined based on information associated with a dedicated channel that associates with the communication channel used by the user equipment (MS1 - MS4).

6. A method as claimed in claim 5, wherein the dedicated channel is selected among the following possibilities: a dedicated physical control channel; a dedicated physical data channel; a common pilot signal channel.

7. A method as claimed in any of claims 1 to 4, wherein the average power is determined based on information associated with a Perch channel.

8. A method as claimed in any of claims 5 to 7, wherein the information comprise the power of said channel.

9. A method as claimed in any preceding claim, wherein the data rate target is defined when the network is planned or upgraded.

10. A method as claimed in any preceding claim, wherein the data rate target is adaptive.

11. A method as claimed in claim 10, wherein the data rate target is adapted based on information regarding the capacity of the station (10).

12. A method as claimed in claim 10 or 11, wherein the data rate target adaptation is accomplished in predefined intervals.

13. A method as claimed in claim 12, wherein the data rate target is kept constant for a predefined number of frames before allowing adaptation thereof.

14. A method as claimed in any preceding claim, wherein the average power is an average power in downlink direction.

15. A method as claimed in any preceding claim, wherein the average power is an average power in uplink direction.

16. A method as claimed in any preceding claim, wherein the data rate is adjusted by a controller of the station (10).

17. A method as claimed in any preceding claim, wherein the data rate is adjusted by a controller of the user equipment (MS1 - MS4).

18. A method as claimed in any preceding claim, wherein the station is a base station (10) of a cellular system and the user equipment (MS1 - MS4) is a transceiver station capable of communicating with the base station via a wireless interface.

19. A method as claimed in claim 18, wherein the cellular system employs code division multiple access.

20. A method as claimed in claim 18 or 19, wherein the average transmission power is determined based on the average transmission power by which the base station (10) transmits towards the transceiver station (MS1 - MS4).

21. A method as claimed in claim 18 or 19, wherein the average transmission power is determined based on the average power in which the base station (10) or the transceiver station (MS1 - MS4) receives.

**22.** A communication system, comprising:

a station (10);
a user equipment (MS1 - MS4) capable of communicating with the station over at least one communication channel shared with other user equipment, the communication system being **characterised by** comprising:

control means for defining a common data rate target for all those user equipment that use the at least one shared communication channel;
means for determining an average power that is used for communication between said user equipment (MS1 - MS4) and said station (10); and
control means for allocating a data rate to be provided for said user equipment based on information of the determined average power and the common data rate target.

**23.** A communication system as claimed in claim 22, wherein the control means for allocating the data rate are adapted to set the data rate based on the distance between the user equipment (MS1 - MS4) and the station (10), the distance being determined based on the determined average power.

**24.** A communication system as claimed in claim 22 or 23, wherein the data rate is adjusted by a controller of the station (10).

**25.** A communication system as claimed in any of claims 22 to 24, wherein the data rate is adjusted by a controller of the user equipment (MS1 - MS4).

**26.** A communication system as claimed in any of claims 22 to 25, wherein the station is a base station (10) of a cellular system and the user equipment is a transceiver station (MS1 - MS4) capable of communicating with the base station via a wireless interface.

**27.** A base station (10) for a communication system, comprising:

transmitter means for transmitting towards a user equipment (MS1 - MS4) over at least one communication channel shared with at least two user equipment, the base station (10) being **characterised by** comprising:

control means for defining a common data rate target for all those user equipment that use the at least one shared communication channel;
means for determining an average power that is used for communication towards said user equipment; and
control means for allocating a data rate to be provided for said user equipment based on information of the determined average power and the common data rate target.

**Patentansprüche**

**1.** Verfahren für ein Kommunikationssystem mit:

Definieren einer gemeinsamen Datenratenvorgabe für eine oder mehrere Teilnehmereinrichtungen (MS1 - MS4), die sich Kommunikationskanäle teilen, wenn sie mit einer Station (10) des Kommunikationssystems kommunizieren, Bestimmen der mittleren, zur Kommunikation zwischen einer Teilnehmereinrichtung und der Station verwendeten Übertragungsleistung, und
Einstellen einer der Teilnehmereinrichtung zugewiesenen Datenrate auf der Grundlage von Informationen über die bestimmte mittlere Übertragungsleistung und die gemeinsame Datenratenvorgabe.

**2.** Verfahren gemäß Anspruch 1, wobei die zugewiesene Datenrate von dem Abstand zwischen der Teilnehmereinrichtung (MS1 - MS4) und der Station (10) abhängt, wobei der Abstand auf der Grundlage der bestimmten mittleren Leistung bestimmt wird.

**3.** Verfahren gemäß Anspruch 2, wobei sich die Abhängigkeit derart darstellt, dass wenn die Teilnehmereinrichtung (MS1 - MS4) näher an der Station (10) als eine weitere Teilnehmereinrichtung lokalisiert ist, dann der einen Teilnehmereinrichtung eine höhere Datenrate als der entfernteren Teilnehmereinrichtung bereitgestellt wird.

**4.** Verfahren gemäß Anspruch 2 oder 3, wobei einer Teilnehmereinrichtung (MS1), die als der Basisstation (10) im wesentlichen nahe bestimmt ist, eine Datenrate bereitgestellt wird, die die gemeinsame Datenratenvorgabe ist oder der gemeinsamen Datenratenvorgabe im wesentlichen nahe ist.

**5.** Verfahren gemäß einem der vorstehenden Ansprüche, wobei die mittlere Leistung auf der Grundlage von Informationen bestimmt wird, die mit einem zugeordneten Kanal assoziiert sind, der wiederum mit dem durch die Teilnehmereinrichtung (MS1 - MS4) verwendeten Kommunikationskanal assoziiert ist.

**6.** Verfahren gemäß Anspruch 5, wobei der zugeordnete Kanal aus den folgenden Möglichkeiten ausgewählt wird:

ein zugeordneter physikalischer Steuerungskanal,
ein zugeordneter physikalischer Datenkanal,
ein gemeinsamer Pilotsignalkanal.

7. Verfahren gemäß einem der Ansprüche 1 bis 4, wobei die mittlere Leistung auf der Grundlage von Informationen bestimmt wird, die mit einem Perch-Kanal assoziiert sind.

8. Verfahren gemäß einem der Ansprüche 5 bis 7, wobei die Informationen die Leistung des Kanals umfassen.

9. Verfahren gemäß einem der vorstehenden Ansprüche, wobei die Datenratenvorgabe bei Planung oder Aufrüstung des Netzwerks definiert wird.

10. Verfahren gemäß einem der vorstehenden Ansprüche, wobei die Datenratenvorgabe anpassungsfähig ist.

11. Verfahren gemäß Anspruch 10, wobei die Datenratenvorgabe auf der Grundlage von Informationen im Hinblick auf die Leistungsfähigkeit der Station (10) angepasst wird.

12. Verfahren gemäß Anspruch 10 oder 11, wobei die Anpassung der Datenratenvorgabe in vordefinierten Intervallen ausgeführt wird.

13. Verfahren gemäß Anspruch 12, wobei die Datenratenvorgabe für eine vordefinierte Anzahl von Rahmen konstant gehalten ist, bevor ihre Anpassung zugelassen wird.

14. Verfahren gemäß einem der vorstehenden Ansprüche, wobei die mittlere Leistung eine mittlere Leistung in Downlink-Richtung ist.

15. Verfahren gemäß einem der vorstehenden Ansprüche, wobei die mittlere Leistung eine mittlere Leistung in Uplink-Richtung ist.

16. Verfahren gemäß einem der vorstehenden Ansprüche, wobei die Datenrate durch eine Steuerungseinrichtung der Station (10) eingestellt wird.

17. Verfahren gemäß einem der vorstehenden Ansprüche, wobei die Datenrate durch eine Steuerungseinrichtung der Teilnehmereinrichtung (MS1 - MS4) eingestellt wird.

18. Verfahren gemäß einem der vorstehenden Ansprüche, wobei die Station eine Basisstation (10) eines zellularen Systems ist und die Teilnehmereinrichtung (MS1 - MS4) eine Sendeempfängerstation darstellt, die mit der Basisstation über eine drahtlose Schnittstelle kommunizieren kann.

19. Verfahren gemäß Anspruch 18, wobei das zellulare System CDMA (Mehrfachzugriff mit Codeteilung, "code division multiple access") einsetzt.

20. Verfahren gemäß Anspruch 18 oder 19, wobei die mittlere Übertragungsleistung auf der Grundlage der mittleren Übertragungsleistung bestimmt wird, mit der die Basisstation (10) an die Sendeempfängerstation (MS1 - MS4) überträgt.

21. Verfahren gemäß Anspruch 18 oder 19, wobei die mittlere Übertragungsleistung auf der Grundlage der mittleren Leistung bestimmt wird, in der die Basisstation (10) oder die Sendeempfängerstation (MS1 - MS4) empfängt.

22. Kommunikationssystem mit:

einer Station (10),
einer Teilernehmereinrichtung (MS1 - MS4), die mit der Station über zumindest einen Kommunikationskanal kommunizieren kann, den sie sich mit einer oder mehreren weiteren Teilnehmereinrichtungen teilt, wobei das Kommunikationssystem **dadurch gekennzeichnet ist, dass** es umfasst:

eine Steuerungseinrichtung zur Definition einer gemeinsamen Datenratenvorgabe für all diejenigen Teilnehmereinrichtungen, die den zumindest einen geteilten Kommunikationskanal verwenden,
eine Einrichtung zur Bestimmung einer mittleren Leistung, die für eine Kommunikation zwischen der Teilnehmereinrichtung (MS1 - MS4) und der Station (10) verwendet wird, und
eine Steuerungseinrichtung zur Zuweisung einer bereitzustellenden Datenrate für die Teilnehmereinrichtungen auf der Grundlage der Informationen über die bestimmte mittlere Leistung und die gemeinsame Datenratenvorgabe.

23. Kommunikationssystem gemäß Anspruch 22, wobei die Steuerungseinrichtung zur Zuweisung der Datenrate zur Einstellung der Datenrate auf der Grundlage des Abstands zwischen der Teilnehmereinrichtung (MS1 - MS4) und der Station (10) eingerichtet ist, wobei der Abstand auf der Grundlage der bestimmten mittleren Leistung bestimmt wird.

24. Kommunikationssystem gemäß Anspruch 22 oder 23, wobei die Datenrate durch eine Steuerungseinrichtung der Station (10) eingestellt wird.

**25.** Kommunikationssystem gemäß einem der Ansprüche 22 bis 24, wobei die Datenrate durch eine Steuerungseinrichtung der Teilnehmereinrichtung (MS1 - MS4) eingestellt wird.

**26.** Kommunikationssystem gemäß einem der Ansprüche 22 bis 25, wobei die Station eine Basisstation (10) eines zellularen Systems ist und die Teilnehmereinrichtung (MS1

- MS4) eine Sendeempfängerstation darstellt, die mit der Basisstation über eine drahtlose Schnittstelle kommunizieren kann.

**27.** Basisstation (10) für ein Kommunikationssystem, die umfasst:

eine Übertragereinrichtung zur Übertragung an eine Teilnehmereinrichtung (MS1 - MS4) über zumindest einen Kommunikationskanal, den sich zumindest zwei Teilnehmereinrichtungen teilen, wobei die Basisstation (10) **dadurch gekennzeichnet ist, dass** es umfasst:

eine Steuerungseinrichtung zur Definition einer gemeinsamen Datenratenvorgabe für all diejenigen Teilnehmereinrichtungen, die den zumindest einen geteilten Kommunikationskanal verwenden,
eine Einrichtung zur Bestimmung einer mittleren Leistung, die für eine Kommunikation zu der Teilnehmereinrichtung verwendet wird, und
eine Steuerungseinrichtung zur Zuweisung einer bereitzustellenden Datenrate für die Teilnehmereinrichtungen auf der Grundlage der Informationen über die bestimmte mittlere Leistung und die gemeinsame Datenratenvorgabe.

**Revendications**

**1.** Procédé pour un système de communication, comprenant :

la définition d'une cible de débit de données commune pour un équipement utilisateur (MS1 - MS4) partageant des canaux de communication lors de la communication avec une station (10) du système de communication ;
la détermination d'une puissance de transmission moyenne utilisée pour une communication entre un équipement utilisateur et ladite station ; et
la définition d'un débit de données attribué audit équipement utilisateur en se basant sur les informations de la puissance de transmission moyenne déterminée et de la cible de débit de données commune.

**2.** Procédé selon la revendication 1, dans lequel le débit de données attribué dépend de la distance entre l'équipement utilisateur (MS1 - MS4) et la station (10), la distance étant déterminée en se basant sur la puissance moyenne déterminée.

**3.** Procédé selon la revendication 2, dans lequel la dépendance est telle que si l'équipement utilisateur (MS1 - MS4) est situé plus près de la station (10) qu'un autre équipement utilisateur, ledit équipement utilisateur reçoit un débit de données plus élevé que ledit équipement utilisateur plus distant.

**4.** Procédé selon la revendication 2 ou 3, dans lequel un équipement utilisateur (MS1) déterminé comme étant sensiblement proche de la station de base (10) reçoit un débit de données qui est la cible de débit de données commune ou sensiblement proche de la cible de débit de données commune.

**5.** Procédé selon l'une quelconque des revendications précédentes, dans lequel la puissance moyenne est déterminée en se basant sur les informations associées à un canal réservé qui est associé au canal de communication utilisé par l'équipement utilisateur (MS1 - MS4).

**6.** Procédé selon la revendication 5, dans lequel le canal réservé est sélectionné parmi les possibilités suivantes : un canal de contrôle physique réservé ; un canal de données physiques réservé ; un canal d'onde pilote commun.

**7.** Procédé selon l'une quelconque des revendications 1 à 4, dans lequel la puissance moyenne est déterminée en se basant sur les informations associées à un canal Perch.

**8.** Procédé selon l'une quelconque des revendications 5 à 7, dans lequel les informations comprennent la puissance dudit canal.

**9.** Procédé selon l'une quelconque des revendications précédentes, dans lequel la cible de débit de données est définie lorsque le réseau est planifié ou mis à niveau.

**10.** Procédé selon l'une quelconque des revendications précédentes, dans lequel la cible de débit de données est adaptative.

**11.** Procédé selon la revendication 10, dans lequel la cible de débit de données est adaptée en se basant sur les informations concernant la capacité de la station (10).

**12.** Procédé selon la revendication 10 ou 11, dans lequel l'adaptation de la cible de débit de données est accomplie dans des intervalles prédéfinis.

**13.** Procédé selon la revendication 12, dans lequel la cible de débit de données est maintenue constante pour un nombre prédéfini de trames avant de permettre l'adaptation de celle-ci.

**14.** Procédé selon l'une quelconque des revendications précédentes, dans lequel la puissance moyenne est une puissance moyenne dans la direction de liaison descendante.

**15.** Procédé selon l'une quelconque des revendications précédentes, dans lequel la puissance moyenne est une puissance moyenne dans la direction de liaison montante.

**16.** Procédé selon l'une quelconque des revendications précédentes, dans lequel le débit de données est ajusté par un contrôleur de la station (10).

**17.** Procédé selon l'une quelconque des revendications précédentes, dans lequel le débit de données est ajusté par un contrôleur de l'équipement utilisateur (MS1 - MS4).

**18.** Procédé selon l'une quelconque des revendications précédentes, dans lequel la station est une station de base (10) d'un système cellulaire et l'équipement utilisateur (MS1 - MS4) est une station émettrice-réceptrice capable de communiquer avec la station de base via une interface sans fil.

**19.** Procédé selon la revendication 18, dans lequel le système cellulaire emploie l'accès multiple par répartition de code.

**20.** Procédé selon la revendication 18 ou 19, dans lequel la puissance de transmission moyenne est déterminée en se basant sur la puissance de transmission moyenne avec laquelle la station de base (10) transmet vers la station émettrice-réceptrice (MS1 -MS4).

**21.** Procédé selon la revendication 18 ou 19, dans lequel la puissance de transmission moyenne est déterminée en se basant sur la puissance moyenne dans laquelle reçoit la station de base (10) ou la station émettrice-réceptrice (MS1- MS4).

**22.** Système de communication, comprenant :

une station (10) ;
un équipement utilisateur (MS1 - MS4) capable de communiquer avec la station sur au moins un canal de communication partagé avec d'autres équipements utilisateur, le système de communication étant **caractérisé en ce qu'**il comprend :

des moyens de commande pour définir une cible de débit de données commune pour l'ensemble de ces équipements utilisateurs qui utilisent au moins un canal de communication partagé ;
des moyens de détermination d'une puissance moyenne qui est utilisée pour la communication entre ledit équipement utilisateur (MS1 - MS4) et ladite station (10) ; et
des moyens de commande pour attribuer un débit de données devant être prévu pour ledit équipement utilisateur en se basant sur les informations de la puissance moyenne déterminée et de la cible de débit de données commune.

**23.** Système de communication selon la revendication 22, dans lequel les moyens de commande pour attribuer le débit de données sont adaptés pour définir le débit de données en se basant sur la distance entre l'équipement utilisateur (MS1 - MS4) et la station (10), la distance étant déterminée en se basant sur la puissance moyenne déterminée.

**24.** Système de communication selon la revendication 22 ou 23, dans lequel le débit de données est ajusté par un contrôleur de la station (10).

**25.** Système de communication selon l'une quelconque des revendications 22 à 24, dans lequel le débit de données est ajusté par un contrôleur de l'équipement utilisateur (MS1- MS4).

**26.** Système de communication selon l'une quelconque des revendications 22 à 25, dans lequel la station est une station de base (10) d'un système cellulaire et l'équipement utilisateur est une station émettrice-réceptrice (MS1

- MS4) capable de communiquer avec la station de base via une interface sans fil.

**27.** Station de base (10) pour un système de communication, comprenant :

des moyens de transmission pour assurer la transmission vers un équipement utilisateur (MS1 - MS4) sur au moins un canal de communication partagé avec au moins deux équipements utilisateur, la station de base (10) étant **caractérisée en ce qu'**elle comprend :

des moyens de commande pour définir

**EP 1 338 098 B1**

une cible de débit de données commune pour l'ensemble de ces équipements utilisateurs qui utilisent au moins un canal de communication partagé ;

des moyens de détermination d'une puissance moyenne qui est utilisée pour la communication vers ledit équipement utilisateur ; et

des moyens de commande pour attribuer un débit de données devant être prévu pour ledit équipement utilisateur en se basant sur les informations de la puissance moyenne déterminée et de la cible de débit de données commune.

Fig. 1

4
3
2
1
10

BS
MS1
MS2
MS3
MS4

EP 1 338 098 B1

Fig. 2

Fig. 3

Define a common data rate target for user equipment sharing at least one communication channel

Determine an average power that is used for communication between a user equipment and a base station over a channel that is different the at least one shared channel

Allocate a data rate for said user equipment based on information of the determined average power and the set common data rate target

Fig. 4